# EUROPEAN PATENT SPECIFICATION

(11) **EP 0 590 523 B1**
(45) Date of publication and mention of the grant of the patent: **12.01.2000**
(21) Application number: 93115383.7
(22) Date of filing: 23.09.1993
(51) Int. Cl.: C09C 1/48, C09C 3/04, C09C 1/60

(54) **Shaped product of carbon black and process for its production**
Formkörper aus Russ und Herstellungsverfahren
Produit façonné en noir de carbone et procédé de production

(30) Priority: 29.09.1992 JP 26032292
(43) Date of publication of application: 06.04.1994
(73) Proprietor: Mitsubishi Chemical Corporation, Chiyoda-ku Tokyo (JP)
(72) Inventor: Kamata, Tomiyuki, c/o Mitsubishi K. Corp. Kurosaki, Kitakyushu-shi, Fukuoka-ken (JP); Karatsu, Masanori, c/o Mitsubishi K. Corp.Kurosaki, Kitakyushu-shi, Fukuoka-ken (JP)
(74) Representative: TER MEER STEINMEISTER & PARTNER GbR

(56) References cited:
- DE-C- 1 302 382
- GB-A- 551 862
- GB-A- 618 955
- DATABASE WPI Week 9140, Derwent Publications Ltd., London, GB; AN 91-291399 & JP-A-3 193 129 (MITSUBISHI KASEI CORP.) 22 August 1991

## Description

The present invention relates to a shaped product of carbon black and a process for its production. More particularly, it relates to a shaped product of carbon black which is easy for handling such as weighing or transportation.

Carbon black is fine powder and yet its bulk density is very low. Thus, it is a substance readily susceptible to dusting. Accordingly, during weighing or packaging such carbon black powder, or during opening of the package for its use, dusting to some extent has been unavoidable, and such a working environment has been not favorable.

Heretofore, to improve the handling property of carbon black, it has been proposed to granulate carbon black powder into flakes or particles of small diameters. However, even if carbon black is so granulated, the effect for suppressing dusting during the weighing has not been sufficient, and during the transportation, a part of the granulated product tends to be powdered and used to cause dusting during the opening of the package, whereby it has been difficult to completely suppress dusting.

Under these circumstances, it is an object of the present invention to suppress dusting during the handling of carbon black such as during the weighing, packaging, transportation or unpackaging and to provide a shaped product of carbon black which can readily be weighed. The present inventors have conducted an extensive study to accomplish the above object and as a result, have found that, while carbon black powder has a low bulk density and it is difficult to mold, it is possible to obtain a shaped product having a proper size by deaerating the powder under reduced pressure in a closed container, followed by molding by utilizing the pressure of the restoration of the internal pressure, and that the weighing can be facilitated by adjusting the size of the shaped product to a certain level.

Thus, the present invention provides a shaped product of carbon black integrally compression-molded and having an apparent specific gravity of from 0.2 to 0.6 g/cc and a weight of at least 5 g.

Further, the present invention provides a process for producing a shaped product of carbon black, which comprises charging a carbon black powder into a closed molding container, subjecting it to vacuum treatment and then restoring the pressure in the molding container to a normal pressure to obtain a shaped product.

Now, the present invention will be described in detail with reference to the preferred embodiments.

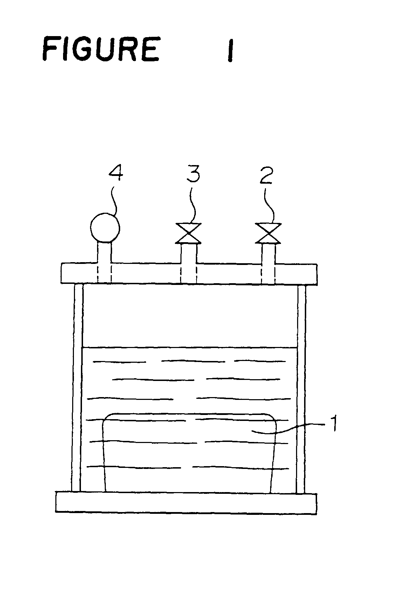

In the accompanying drawing, Figure 1, is a diagrammatic view showing the construction of the molding container used in the Example of the present invention.

The shape of the shaped product of carbon black of the present invention is not particularly limited, but is usually columnar or angular pillar-shaped, and the size of this shaped product is usually such that the length of the longest side is at least 5 cm. Specifically, a size having a diameter of from 3 to 30 cm and a length of from 5 to 50 cm may, for example, be mentioned. The weight of this shaped product is at least 5 g, preferably from 0.5 to 10 kg. From the viewpoint of the weighing efficiency, it is preferred to adjust the weight to a convenient level of e.g. 0.5 kg, 1.0 kg or 5.0 kg. The shaped product of the present invention consists substantially of carbon black only, and no other additives are usually contained.

The shaped product of the present invention is the one integrally molded by compression molding, and its apparent specific gravity is from 0.2 to 0.6 g/cc, preferably from 0.25 to 0.4 g/cc. The strength of the shaped product is preferably from 200 to 800 g. The strength of the shaped product is measured as follows.

### 1. Preparation of samples

A shaped product molded into an optional shape is cut into cubes with each side being 10 mm by a cutter knife to obtain samples. Three samples are prepared for each test.

### 2. Measuring method

(1) A sample is placed gently on the scale pan of a weighing scale.
(2) An adapter (a stainless steel plate having a size of 50 mm × 50 mm and a thickness of at least 0.1 mm) is placed on the top of the sample.
(3) The scale is adjusted to 0.
(4) The center of the adapter is pressed by the forward end of a spatula.
(5) Upon breakage of the sample (i.e. when the sample undergoes cracking even slightly), the weight is read to a decimal place, and this value is taken as the strength.
(6) After the measurement, carbon attached to the adapter and the scale pan is removed.
(7) Steps (1) to (6) are repeated.

### 3. Calculation

(1) The measurement was conducted on three samples to obtain three measured values, and their average value was taken as the value of the strength.
(2) Each measured value was obtained to a decimal place and calculated to an integer by counting fractions of 0.5 and over as a whole number and disregarding the rest.

If such strength of the shaped product is less than 100 g, the shaped product is very brittle and will be broken by normal handling. When the strength is at least 200 g, it will not be broken by normal handling. On the other hand, if the strength is too high, there will be a drawback that dispersion of the carbon black tends to be poor when it is actually used.

As described above, the shaped product of carbon black of the present invention is compression-molded and has an apparent specific gravity and strength of proper levels, whereby it will be free from disintegration or from being powdered during the handling such as the weighing, packaging or transportation. However, at the time of its use, e.g. when it is stirred together with a medium to be mixed, the shaped product can readily be disintegrated and satisfactorily dispersed. Here, the property values of the dispersed carbon black are not different from those of non-molded carbon black. Further, in a case of preparing an ink, there is a preferred tendency with the shaped product of the present invention such that the initial dispersibility is even better than granular or flaky carbon black.

As a process for producing the shaped product of carbon black of the present invention, a process is usually preferred in which a carbon black powder is charged into a closed molding container, the container is deaerated under reduced pressure, and then the internal pressure is restored to normal pressure to obtain a shaped product. By this process, only a vacuuming operation is required, and no pressurizing operation is required. That is, a carbon black powder having a large apparent specific gravity is preliminarily deaerated under reduced pressure and then molded by utilizing the pressure at the time of restoring the pressure to a normal level. Accordingly, the carbon black powder in the molding container is subjected to deaeration by the vacuum treatment and the volume is reduced by the treatment for restoring the pressure to a normal level.

The pressure at the time of the vacuum treatment is preferably reduced usually to a level of not higher than 25 mmHg, preferably not higher than 3 mmHg. For the vacuum treatment, the vacuum operation is conducted by a method wherein the pressure is reduced to a predetermined level in a short period of time by vacuuming from a vacuum port provided at a gas phase section of the molding container. By this operation, the carbon black powder in the molding container is deaerated.

Then, the pressure in the molding container is restored to normal pressure by opening the pressure-restoration port provided at the gas phase section of the molding container. This pressure-restoration time may vary depending upon the size of the container, but it is usually from 0.5 to 5 seconds, preferably from 1 to 3 seconds. If the pressure-restoration time is too short, the shaped product is likely to be broken, and if it is too long, the strength of the shaped product tends to be inadequate. By this operation, the carbon black in the molding container undergoes a volume reduction, whereby a shaped product having the above-mentioned apparent specific gravity and strength, will be obtained.

The carbon black powder to be used as the starting material in the present invention may be the one commercially available as a usual pigment or as a filler for rubber. For example, carbon black having an apparent specific gravity of from 0.03 to 0.20 g/cc and a water content of not more than 4% by weight, may be mentioned

By the molding process of the present invention, a shaped product of carbon black having an optional shape such as a columnar shape and a suitable size, can be produced. For example, in a case where a columnar shaped product is to be produced, a cylindrical partition frame (molding frame) is provided in the molding container, and a predetermined amount of a carbon black powder is uniformly supplied thereinto, followed by the above described molding treatment, to obtain an integral columnar shaped product corresponding to the shape of the molding frame. Further, in a case where an angular pillar-like shaped product is to be produced, lattice frames having a predetermined height (molding frames) are provided in the molding container, a predetermined amount of a carbon black powder is uniformly supplied into each lattice frame, followed by the above described molding treatment, to obtain a plurality of angular shaped products (square fillers, hexagonal pillars or octagonal pillars) corresponding to the lattice frames.

Now, the present invention will be described in further detail with reference to an Example of the present invention. However, it should be understood that the present invention is by no means restricted to such a specific Example.

### EXAMPLE 1

Molding of a carbon black powder was conducted by means of a closed molding container having a construction as shown in Figure 1.

Into a powder-receiving section (1) (a cylinder having a diameter of 30 cm) of the molding container, 1.8 kg of a commercially available carbon black powder (apparent specific gravity: 0.14 g/cc) was charged, and the top surface was uniformly leveled (height: 18 cm). Then, the interior was sealed and vacuumed through a vacuum port (2) for vacuum treatment to reduce the internal pressure to a level of not higher than 1 mmHg in 30 seconds. Then, a pressure-restration port (3) was opened to restore the internal pressure to normal pressure in about two seconds (reference numeral (4) indicates a pressure meter).

By this molding, a shaped product of carbon black integrally molded, having a diameter of 26 cm and a thickness of 11 cm, was obtained. The apparent specific gravity of this shaped product was 0.31 g/cc, and the strength was 250 g. Further, the weight was 1.8 kg, which was the same as the charged amount.

This shaped product of carbon black did not disintegrate when it was taken out from the molding container or during the handling such as the transportation, and it was, of course, free from dusting.

Further, this shaped product of carbon black was used for preparation of an ink in accordance with a conventional method, whereby the shaped product was readily disintegrated and satisfactorily dispersed by usual stirring in the mixing treatment, and it was free from any trouble for the preparation of the ink.

The shaped product of carbon black of the present invention is free from dusting during the handling such as the weighing, packaging, transportation or unpackaging, whereby the handling can be facilitated very much. Further, by adjusting the weight of the shaped product to a predetermined level, the weighing operation can be simplified.

Further, the molding process of the present invention is industrially advantageous, since it is thereby possible to simply produce a shaped product of any desired shape with a desired size.

## Claims

1. A shaped product of carbon black integrally compression-molded and having an apparent specific gravity of from 0.2 to 0.6 g/cc and a weight of at least 5 g.

2. The shaped product of carbon black according to Claim 1, which is columnar or angular pillar-shaped with a length of at least 5 cm.

3. The shaped product of carbon black according to Claim 1, which is columnar with a diameter of from 3 to 30 cm and a length of from 5 to 50 cm.

4. The shaped product of carbon black according to Claim 1, which has a weight of from 0.5 to 10 kg.

5. The shaped product of carbon black according to Claim 1, which has an apparent specific gravity of from 0.25 to 0.4 g/cc.

6. The shaped product of carbon black according to Claim 1, which has a strength of from 200 to 800 g.

7. A process for producing a shaped product of carbon black, which comprises charging a carbon black powder into a closed molding container, subjecting it to vacuum treatment and then restoring the pressure in the molding container to a normal pressure to obtain a shaped product of carbon black, wherein the process is carried out with no pressurizing operation.

8. The process according to Claim 7, wherein during the vacuum treatment, the pressure in the molding container is reduced to a level of not higher than 25 mmHg.

9. The process according to Claim 7, wherein the restoration of the pressure is conducted in from 0.5 to 5 seconds.

10. The process according to Claim 7, wherein the carbon black powder to be charged has an apparent specific gravity of from 0.03 to 0.20 g/cc and a water content of not higher than 4% by weight.

## Patentansprüche

1. Formkörper aus Ruß, welcher integral formgepreßt worden ist und eine scheinbare relative Dichte von 0,2 bis 0,6 g/cm³ und ein Gewicht von mindestens 5 g aufweist.

2. Formkörper aus Ruß nach Anspruch 1, welcher säulenförmig oder winkelsäulenförmig mit einer Länge von mindestens 5 cm ist.

3. Formkörper aus Ruß nach Anspruch 1, welcher säulenförmig mit einem Durchmesser von 3 bis 30 cm und einer Länge von 5 bis 50 cm ist.

4. Formkörper aus Ruß nach Anspruch 1, welcher ein Gewicht von 0,5 bis 10 kg aufweist.

5. Formkörper aus Ruß nach Anspruch 1, welcher eine scheinbare relative Dichte von 0,25 bis 0,4 g/cm³ aufweist.

6. Formkörper aus Ruß nach Anspruch 1, welcher eine Festigkeit von 200 bis 800 g aufweist.

7. Verfahren zur Herstellung eines Formkörpers aus Ruß, umfassend das Beschicken eines Rußpulvers in einen geschlossenen Formungsbehälter, Unterziehen dieses einer Vakuumbehandlung und danach Wiederherstellen des Drucks in dem Formungsbehälter auf einen normalen Druck, um einen Formkörper aus Ruß zu erhalten, wobei das Verfahren ohne Druckbeaufschlagungbehandlung durchgeführt wird.

8. Verfahren nach Anspruch 7, wobei während der Vakuumbehandlung der Druck in dem Formungsbehälter auf einen Wert von nicht höher als 25 mmHg verringert wird.

9. Verfahren nach Anspruch 7, wobei die Wiederherstellung des Drucks in 0.5 bis 5 Sekunden durchgeführt wird.

10. Verfahren nach Anspruch 7, wobei das zu beschickcnde Rußpulver eine scheinbare relative Dichte von 0,03 bis 0,20 g/cm³ und einen Wassergehalt von nicht höher als 4 Gew.-% aufweist.

## Revendications

1. Produit mis en forme, en noir de carbone, intégralement moulé sous pression et possédant une gravité spécifique apparente allant de 0,2 à 0,6 g/cm³ et une masse d'au moins 5 g.

2. Produit mis en forme, en noir de carbone, selon la revendication 1, caractérisé en ce qu'il est en forme de colonne ou de pilier angulaire et qu'il possède une longueur d'au moins 5 cm.

3. Produit mis en forme, en noir de carbone, selon la revendication 1, caractérisé en ce qu'il est en forme de colonne avec un diamètre allant de 3 à 30 cm et une longueur de 5 à 50 cm.

4. Produit mis en forme, en noir de carbone, selon la revendication 1, caractérisé en ce qu'il possède un poids de 0,5 à 10 kg.

5. Produit mis en forme, en noir de carbone, selon la revendication 1, caractérisé en ce qu'il possède une gravité spécifique apparente allant de 0,25 à 0,4 g/cm³.

6. Produit mis en forme, en noir de carbone, selon la revendication 1, caractérisé en ce qu'il possède une résistance à la contrainte allant de 200 à 800 g.

7. Procédé de production d'un produit mis en forme, en noir de carbone, comprenant les étapes consistant à charger une poudre de noir de carbone dans un container de moulage clos, la soumettre à un traitement sous vide et ensuite rétablir la pression dans le container de moulage jusqu'à une pression normale de façon à obtenir un produit mis en forme, en noir de carbone, caractérisé en ce que ledit procédé est mis en oeuvre sans opération de pressurisation.

8. Procédé selon la revendication 7, caractérisé en ce que, pendant le traitement sous vide, la pression dans le container de moulage est réduite à un niveau ne dépassant pas 25 mm Hg.

9. Procédé selon la revendication 7, caractérisé en ce que le rétablissement de la pression est accompli en une durée allant de 0,5 à 5 secondes.

10. Procédé selon la revendication 7, caractérisé en ce que la poudre de noir de carbone à charger possède une gravité spécifique apparente allant de 0,03 à 0,20 g/cm³ et un taux d'humidité ne dépassant pas 4% en poids.
